# EUROPÄISCHE PATENTSCHRIFT

(11) **EP 1 203 443 B1**
(45) Veröffentlichungstag und Bekanntmachung des Hinweises auf die Patenterteilung: **26.10.2005**
(21) Anmeldenummer: 01909515.7
(22) Anmeldetag: 24.01.2001
(51) Int. Cl.: H02P 1/18, E05F 15/16

(54) **VERFAHREN ZUR STEUERUNG EINES ELEKTRISCHEN ANTRIEBSMOTORS EINES KRAFTFAHREUG-VERSTELLANTRIEBES**
METHOD FOR CONTROLLING AN ELECTRIC DRIVING MOTOR OF AN ADJUSTING DEVICE PERTAINING TO A MOTOR VEHICLE
PROCEDE POUR COMMANDER UN MOTEUR D'ENTRAINEMENT ELECTRIQUE D'UN DISPOSITIF D'ENTRAINEMENT DE REGLAGE MONTE DANS UN VEHICULE AUTOMOBILE

(30) Priorität: 19.02.2000 DE 10007690
(43) Veröffentlichungstag der Anmeldung: 08.05.2002
(73) Patentinhaber: ROBERT BOSCH GMBH, 70442 Stuttgart (DE)
(72) Erfinder: HAUSSECKER, Walter, 77830 Buehlertal (DE); VOEHRINGER, Klaus, 76316 Malsch (DE); KLIFFKEN, Markus, 77815 Buehl (DE); KOTTHAUS, Stefan, 76547 Sinzheim (DE); SOELLNER, Michael, 77839 Lichtenau (DE)
(86) Internationale Anmeldenummer: PCT/DE2001/000266
(87) Internationale Veröffentlichungsnummer: WO 2001/061835

(56) Entgegenhaltungen:
- EP-A- 0 064 929
- US-A- 5 747 956
- WOODWORTH A: "MOSFETS CONTROL MOTORS IN AUTOMOTIVE APPLICATIONS" ELECTRONIC COMPONENTS AND APPLICATIONS,NL,PHILIPS. EINDHOVEN, Bd. 9, Nr. 2, 1989, Seiten 91-100, XP000073925

## Beschreibung

### Stand der Technik

Die Erfindung betrifft ein Verfahren zur Steuerung eines elektrischen Antriebsmotors eines Kraftfahrzeug-Verstellantriebs mittels einer variablen Spannung, die an ihn angelegt wird.

Ein solches Verfahren ist aus der DE 43 04 960 A1 bzw. der US-A-5 747 956 bekannt, wobei ein impulsdauermoduliertes Steuersignal eine Leistungsendstufe ansteuert. Auf diese Weise wird eine Ausgangsspannung erzeugt, die von dem Steuersignal abhängt und an den Antriebsmotor angelegt wird. Indem an den Antriebsmotor bei dessen Anlauf eine niedrige Spannung angelegt wird, läuft der Antriebsmotor sanft an, so daß der mit ihm verbundene Verstellantrieb, beispielsweise eine Sitz- oder Scheibenverstellung, keinen großen mechanischen Belastungen ausgesetzt wird.

Mit der EP-A- 00 64 929 ist ein Verfahren zur Steuerung eines Antriebsmotors eines Kraftfahrzeug-Verstellantriebs bekannt geworden, bei dem ein Transistor als steuerbarer Widerstand eine änderbare Spannung zur Verfügung stellt. Damit kann an den Motor beispielsweise eine Spannung angelegt werden, die nur die Hälfte der gesamten Verstärkungsspannung beträgt.

Nachteilig bei diesem bekannten Verfahren ist, daß aufgrund des impulsdauermodulierten Steuersignals ein großer Aufwand hinsichtlich der EMV-Entstörung betrieben werden muß. Wenn hierzu Elektrolytkondensatoren verwendet werden, wie dies häufig der Fall ist, ergibt sich ein vergleichsweise großer Bauraum; ferner ist der Temperaturbereich eingeschränkt, in welchem diese Steuerung betrieben werden kann.

Die Aufgabe der Erfindung besteht somit darin, ein Verfahren zur Steuerung eines Antriebsmotors zu schaffen, das mit geringem Aufwand, insbesondere hinsichtlich der erforderlichen Entstörung, ein sanftes Anlaufen des Antriebsmotors ermöglicht.

### Vorteile der Erfindung

Das erfindungsgemäße Verfahren mit den Merkmalen des Patentanspruchs 1 bietet den Vorteil, daß die durch ein impulsdauermoduliertes Steuersignal entstehenden Störungen vermieden werden. Ferner ergibt sich eine Verringerung von Stromspitzen beim Anlaufen des Antriebsmotors. Somit sind keine zusätzlichen Entstörbauelemente erforderlich; es genügt die übliche Entstörung, die beispielsweise auch lokal im Bürstenhalter des Antriebsmotors verbleiben kann.

Gemäß der Erfindung ist vorgesehen, daß an den Antriebsmotor zum Anlaufen zunächst eine Startspannung angelegt wird, die geringer ist als eine während des Betriebs anliegende Nennspannung, und daß die Spannung dann auf die Nennspannung erhöht wird. Ein langsames Anlaufen des Antriebsmotors verringert sowohl die mechanischen Belastungen der Bauteile des Verstellantriebs als auch die beim Anlaufen entstehenden Geräusche. Diese Geräusche entstehen insbesondere durch das Spiel, das zwischen allen an der Kraftübertragung im Verstellantrieb beteiligten Bauteilen vorliegt. Würde an den Antriebsmotor unmittelbar die Nennspannung angelegt, würde dieser aufgrund des vorhandenen Spiels zunächst mit hoher Geschwindigkeit anlaufen, bis das Spiel in der entsprechenden Drehrichtung beseitigt ist. Aufgrund des dann plötzlich ansteigenden Widerstandes kommt es zu einem "Schlag" im Verstellantrieb, der mit einer großen Geräuschentwicklung einhergeht. Wenn dagegen an den Antriebsmotor zunächst eine geringe Spannung angelegt wird, wird das im Verstellantrieb vorhandene Spiel vergleichsweise sanft beseitigt, und das abrupte Abbremsen des bereits angelaufenen Antriebsmotors durch den sich nach Beseitigen des Spiels ergebenden Widerstandsanstieg wird verhindert.

Vorzugsweise wird die an den Antriebsmotor angelegte Spannung innerhalb einer Zeitdauer von etwa 0,15 bis 0,5 Sekunden von der Startspannung bis auf die Nennspannung erhöht. Es hat sich nämlich herausgestellt, daß bereits diese kurze Zeitdauer ausreichend ist, um das Spiel im Verstellantrieb ausreichend sanft zu beseitigen. Würde eine längere Zeitdauer gewählt, innerhalb derer die an den Antriebsmotor angelegte Spannung von der Startspannung bis auf die Nennspannung steigt, würde sich nahezu keine Komfortverbesserung mehr ergeben, während die in dieser Zeitdauer am steuerbaren Widerstand anfallende Verlustleistung stark ansteigen würde. Die genannte Zeitdauer stellt daher einen guten Kompromiß zwischen hohem Komfort einerseits und niedriger Verlustleistung andererseits dar.

Die an den Antriebsmotor angelegte Spannung kann zwischen der Startspannung und der Nennspannung einen unterschiedlichen Verlauf haben. Es ist möglich, die Spannung linear von der Startspannung bis auf die Nennspannung zu erhöhen, wobei als Startspannung ein beliebiger Wert zwischen 0 und einem Wert von etwa 30 % der Nennspannung gewählt werden kann. Je höher die Startspannung gewählt wird, desto geringer ist die bis zum Erreichen der Nennspannung anfallende Verlustleistung. Je niedriger die Startspannung gewählt wird, desto geringer ist der beim Anlaufen des Antriebsmotors auftretende "Schlag" und die daraus resultierenden mechanischen Belastungen und Geräuschprobleme.

Gemäß einer Ausführungsform der Erfindung ist vorgesehen, daß vor dem eigentlichen Anlaufen des Antriebsmotors bereits für eine kurze Zeit eine Spannung an diesen angelegt wird. Diese Spannung, die auch die Nennspannung sein kann, wird für eine so kurze Zeitdauer angelegt, daß der Antriebsmotor gerade das Spiel aus dem Verstellantrieb beseitigen kann. Da die Spannung rechtzeitig wieder unterbrochen wird, bevor das Spiel beseitigt ist und der ganze Verstellantrieb anläuft, muß beim Erreichen des Widerstandsanstieges im wesentlichen nur das Massenträgheitsmoment des Antriebsmotors abgebremst werden. Der sich dabei ergebende "Schlag" ist vergleichsweise gering. Anschließend kann wieder eine ausgehend von der Startspannung bis auf die Nennspannung ansteigende Spannung an den Antriebsmotor angelegt werden, so daß dieser ruckfrei den Verstellantrieb in Bewegung setzt. Da vor diesem endgültigen Anlaufen bereits das Spiel aus dem Verstellantrieb beseitigt ist, kann der Anstieg von der Startspannung auf die Nennspannung entsprechend steil erfolgen, was hinsichtlich der anfallenden Verlustleistung vorteilhaft ist. Wenn als Startspannung eine Spannung von Null verwendet wird, der Anstieg bis auf die Nennspannung entsprechend steil erfolgt und außerdem vor dem eigentlichen Anlaufen kurz die Nennspannung an den Antriebsmotor angelegt wurde, kann diese Betriebsart rein gedanklich mit einer lmpulsdauermodulation verglichen werden, bei der an den Antriebsmotor zunächst kurz die Nennspannung angelegt wird, um das Spiel aus dem Verstellantrieb zu beseitigen, dann die Spannung kurz ausgeschaltet wird, damit der Antriebsmotor mit dem Verstellantrieb in einem Zustand zur Ruhe kommt, in welchem das Spiel beseitigt ist, und dann an den Antriebsmotor wieder die Nennspannung angelegt wird, damit der Antriebsmotor anläuft und den Verstellantrieb in Bewegung setzt.

Gemäß der Erfindung ist vorgesehen, daß vor dem Anlaufen des Antriebsmotors überprüft wird, in welcher Drehrichtung der Antriebsmotor zuletzt betrieben wurde, und daß an den Antriebsmotor nur dann die Startspannung angelegt wird, wenn der Antriebsmotor in einer zur letzten Drehrichtung entgegengesetzten Richtung anlaufen soll, während andernfalls unmittelbar die Nennspannung angelegt wird. Dieses Verfahren beruht auf der Erkenntnis, daß das Spiel im Verstellantrieb nur dann vorliegt, wenn der Antriebsmotor in der zur letzten Drehrichtung entgegengesetzten Drehrichtung anlaufen soll. Somit ist es nur in diesem' Fall erforderlich, den Antriebsmotor sanft anlaufen zu lassen, während andernfalls sofort die Nennspannung an den Antriebsmotor angelegt werden kann. Diese Ausgestaltung des Verfahrens hat den Vorteil, daß die Verlustleistung im steuerbaren Widerstand nur dann anfällt, wenn das sanfte Anlaufen des Antriebsmotors tatsächlich erforderlich ist. In einer Weiterbildung des beschriebenen Verfahrens ist vorgesehen, daß die Nennspannung an den Antriebsmotor nur dann angelegt wird, wenn seit dem letzten Betrieb eine bestimmte Zeitdauer vergangen ist. Auf diese Weise wird verhindert, daß der Antriebsmotor in blockiertem Zustand, beispielsweise wenn ein von dem Verstellantrieb bewegtes Bauteil sich in seiner Endstellung befindet, kurz hintereinander mehrfach eingeschaltet wird, beispielsweise von spielenden Kindern, die mehrfach einen Fensterheberschalter drücken. Wenn bei jeder Betätigung des Fensterheberschalters und bei bereits geschlossenem Fenster jedesmal der Antriebsmotor eingeschaltet würde, könnten die dabei fließenden Blockierströme zu einer unzulässig hohen thermischen Belastung des Antriebsmotors führen.

Gemäß einem Verfahren, das nicht der obigen Erfindung entspricht, ist vorgesehen, daß vor dem Anlaufen des Antriebsmotors die Temperatur einer Steuerung für den Antriebsmotor überprüft wird und daß an den Antriebsmotor nur dann die Startspannung angelegt wird, wenn die sich dabei ergebende Verlustleistung zu keiner Beschädigung der Steuerung führt, während andernfalls unmittelbar die Nennspannung angelegt wird. Auf diese Weise ist eine Sicherheitsfunktion realisiert, die dann, wenn die beim sanften Anlaufen des Antriebsmotors im steuerbaren Widerstand anfallende Verlustleistung zu unzulässig hohen Temperaturen führen würde, den Antriebsmotor unmittelbar mit der Nennspannung beaufschlagt Dadurch wird verhindert, daß im steuerbaren Widerstand eine hohe Verlustleistung anfällt. Somit ist unter allen Umständen die Betriebsbereitschaft des Verstellantriebes gewährleistet, wobei sich aber bei kritischen Temperaturbedingungen ein verringerter Komfort, der sich in einer höheren Geräuschentwicklung beim Anlaufen des Antriebsmotors ausdrückt, ergibt.

Gemäß einer Variante der Erfindung ist vorgesehen, daß an den Antriebsmotor zum Abstoppen eine Spannung angelegt wird, die kontrolliert von cer Nennspannung bis auf Null absinkt. Auf diese Weise lassen sich verschiedene vorteilhafte Verfahren erzielen, um den Antriebsmotor zu stoppen, wenn ein vom Verstellantrieb bewegtes Bauteil, beispielsweise ein elektrisch verstellbarer Sitz, eine Fensterscheibe oder ein Schiebedach, gegen einen Anschlag fährt.

Gemäß einer Ausgestaltung ist vorgesehen, daß die Position eines vom Antriebsmotor angetriebenen Bauteils überwacht und der Antriebsmotor rechtzeitig abgeschaltet wird, bevor das Bauteil einen ihm zugeordneten Anschlag erreicht. Bei diesem Verfahren, bei dem durch eine Normierung die absolute Position des zu bewegenden Bauteils bekannt sein muß, werden die Geräusche vermieden, die entstehen, wenn das Bauteil vom Antriebsmotor gegen einen Anschlag gefahren wird. Ein weiterer Vorteil besteht darin, daß die Verlustleistung keine hohen Spitzenwerte durch das Blockieren des Antriebsmotors annimmt. Wenn weiterhin die verwendete Steuerschaltung kein mechanisches Relais aufweist, sondern ausschließlich elektronische Bauteile, kann der Ausschaltzeitpunkt sehr präzise bestimmt und eingehalten werden, da nicht die Flugzeit von mechanischen Teilen berücksichtigt werden muß, so daß die Sollposition beim Abschalten genau eingehalten werden kann.

Alternativ kann vorgesehen sein, daß das von dem Antriebsmotor bereitgestellte Drehmoment überwacht und der Antriebsmotor abgeschaltet wird, wenn ein bestimmtes Drehmoment überschritten wird, das signifikant dafür ist, daß ein vom Antriebsmotor angetriebenes Bauteil einen ihm zugeordneten Anschlag erreicht hat. Bei dieser Variante der Verfahrens wird im Vorfeld ermittelt, welchen Verlauf die sich ergebende Widerstandskraft hat, wenn das von dem Verstellantrieb angetriebene Bauteil gegen den entsprechenden Anschlag fährt. Wenn dann die erforderliche Kraft überwacht wird und der Antriebsmotor rechtzeitig abgeschaltet wird, werden hohe Blockierströme vermieden.

Es ist grundsätzlich auch möglich, das hier als Variante der Erfindung beschriebene Verfahren zum Abstoppen des Antriebsmotors auch unabhängig von der Verwendung der ansteigenden Spannung beim Anlaufen des Antriebsmotors einzusetzen.

Als steuerbarer Widerstand kann ein Transistor verwendet werden, insbesondere ein MOS-Feldeffekttransistor oder ein bipolarer Transistor.

Vorteilhafte Ausgestaltungen der Erfindung ergeben sich aus den Unteransprüchen.

### Zeichnungen

Die Erfindung wird nachfolgend unter Bezugnahme auf verschiedene Ausführungsformen beschrieben, die in den beigefügten Zeichnungen dargestellt sind. In diesen zeigen:
- die Figuren 1a bis 1e verschiedene Verläufe einer an den Antriebsmotor angelegten Spannung sowie die sich dabei jeweils ergebende Verlustleistung;
- Figur 2 ein Blockschaltbild einer Schaltung zur Ansteuerung eines Antriebsmotors:
- Figur 3 in einem Diagramm den Verlauf einer Steuerspannung bei der Schaltung von Figur 2;
- Figur 4 ein Blockschaltbild einer weiteren Schaltung zur Motoransteuerung; und
- Figur 5 ein Blockschaltbild einer wiederum weiteren Schaltung zur Motoransteuerung.

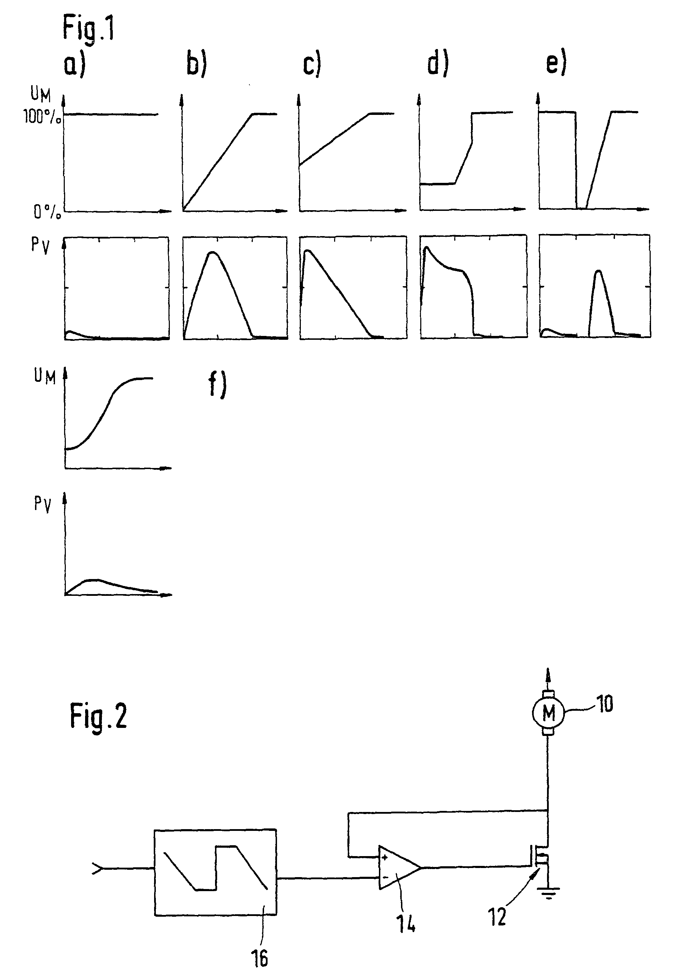

In Figur 1a sind der Verlauf einer an einen Antriebsmotor angelegten Spannung U_{M} sowie die sich beim Anlaufen des Antriebsmotors ergebende Verlustleistung P_{V} dargestellt. In diesen Diagrammen wird an den Antriebsmotor zum Anlaufen unmittelbar eine Spannung in Höhe von 100 % der Nennspannung angelegt. Es ergibt sich zwar eine sehr geringe Verlustleistung P_{V}, jedoch ergeben sich auch die unerwünschten Begleiterscheinungen einer hohen Geräuschentwicklung sowie einer starken mechanischen Belastung der Bauteile eines mit dem Antriebsmotor verbundenen Verstellantriebs.

In Figur 1b sind der Verlauf der Spannung sowie die sich ergebende Verlustleistung aufgetragen, wenn der Antriebsmotor mit einem erfindungsgemäßen Verfahren angesteuert wird. Die an den Motor angelegte Spannung wird über einen steuerbaren Widerstand bereitgestellt, so daß sie bei dieser Ausführungsform beginnend mit einer Startspannung von Null auf die Nennspannung linear ansteigt. Dadurch ergibt sich ein sehr sanftes Anlaufen des Antriebsmotors mit entsprechend geringer Geräuschentwicklung und geringen mechanischen Belastungen. Wie in dem unteren Diagramm in Figur 1b zu sehen ist, fällt jedoch am steuerbaren Widerstand eine vergleichsweise große Verlustleistung an.

In Figur 1c ist eine Variante zum vorhergehenden Verlauf gezeigt. Hierbei wird die an den Antriebsmotor angelegte Spannung ausgehend von einer Startspannung, die etwa 30 % der Nennspannung beträgt, linear bis auf die Nennspannung erhöht. Auch bei diesem Verlauf der Nennspannung ergibt sich eine beträchtliche Verlustleistung.

In Figur 1d ist eine Abwandlung gezeigt, bei der die an den Antriebsmotor angelegte Spannung ausgehend von einer von Null verschiedenen Startspannung, die zunächst für eine bestimmte Zeitdauer konstant gehalten wird, linear bis auf eine Zwischenspannung ansteigt, von der ausgehend die Spannung sprungartig auf die Nennspannung erhöht wird. Auf diese Weise ergibt sich zuerst ein Anlaufen des Antriebsmotors mit verringerter Startspannung; wenn das Spiel im Verstellantrieb beseitigt ist und alle mechanischen Teile sich bereits in Bewegung befinden, wird der Antriebsmotor zuerst mit der steil ansteigenden Spannung und schließlich sprungartig mit der Nennspannung versorgt.

In Figur 1e ist der Verlauf der Startspannung gemäß einer Vorgehensweise gezeigt, bei der sich eine vergleichsweise geringe Verlustleistung ergibt. An den Antriebsmotor wird zuerst für eine kurze Zeitdauer die Nennspannung angelegt. Diese Zeitdauer ist so bemessen, daß die Nennspannung wieder ausgeschaltet ist, bevor der Antriebsmotor das Spiel des Verstellantriebes beseitigt hat. Aufgrund seiner Massenträgheit dreht sich der Anker des Antriebsmotors auch nach dem Abschalten der Nennspannung weiter, bis er, wenn das Spiel im Verstellantrieb beseitigt ist, von dem dann ansteigenden Widerstand im Verstellantriebes abgebremst wird. Es ist also gewährleistet, daß der Antriebsmotor nicht etwa, wenn er noch mit der Nennspannung beaufschlagt wird, sich nach Überwinden des Spiels gegen die noch feststehenden Teile des Verstellantriebes dreht. Anschließend kann an den Antriebsmotor eine Spannung angelegt werden, die ausgehend von einer Startspannung von Null vergleichsweise steil bis auf die Nennspannung ansteigt. Hierbei ergibt sich insgesamt eine geringe Verlustleistung.

In Figur 1f ist ein S-förmiger Verlauf der Startspannung gezeigt. Hierbei ergibt sich eine geringe Geräuschentwicklung bei ebenfalls geringer Verlustleistung, jedoch hohem schalttechnischem Aufwand.

Zu den gezeigten Diagrammen ist anzumerken, daß sie beispielhaft sind. Es sind auch andere Verläufe möglich. So könnte eine Kurve gewählt werden, die einen Kompromiß aus Komplexität der Steuerschaltung, Geräuschentwicklung und Verlustleistung darstellt.

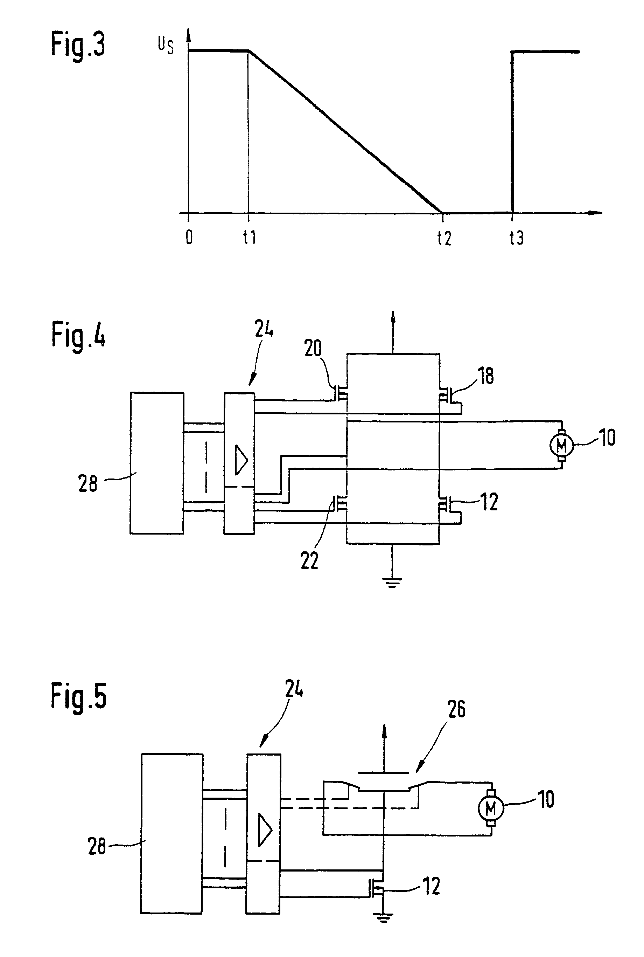

In Figur 2 ist ein Blockschaltbild einer Schaltung zur Ansteuerung eines elektrischen Antriebsmotors 10 gezeigt. Als steuerbarer Widerstand wird ein Transistor 12 verwendet, der von einer Regelschaltung 14 angesteuert wird. Wenn als Transistor 12 ein MOS-Feldeffekttransistor verwendet wird, ist die Regelschaltung, die beispielsweise eine einfache Verstärkerschaltung mit Operationsverstärker sein kann, mit dem Gate verbunden, und wenn ein bipolarer Transistor verwendet wird, ist die Regelschaltung mit der Basis verbunden. Die Regelschaltung gewährleistet, daß die an den Antriebsmotor 10 anliegende Spannung beim Anlaufen des Motors linear ansteigt. Zu diesem Zweck wird ein Steuersignal verwendet, dessen Verlauf in Figur 3 zu sehen ist und das von einer Steuerschaltung 16 bereitgestellt wird.

Im Ruhezustand liegt am Antriebsmotor 10 keine Spannung an, da die Steuerschaltung 16 eine Spannung abgibt, die über die Regelschaltung 14 den Transistor ausschaltet. Die Spannung am Kollektor des Transistors liegt entsprechend auf dem Versorgungspotential. Wenn der Motor zum Zeitpunkt t1 eingeschaltet werden soll, senkt die Steuerschaltung 16, wie in Figur 3 gezeigt, die Steuerspannung linear ab. Dies kann durch Auf- bzw, Entladen eines Kondensators geschehen. Die Regelschaltung 14 steuert nun den Transistor so, daß dessen Kollektorspannung diesem Verlauf folgt. Somit steigt die an den Antriebsmotor 10 angelegte Spannung. Zum Zeitpunkt t2 beträgt die Steuerspannung 0 Volt, was bedeutet, daß der Transistor vollständig durchlässig ist. Am Antriebsmotor liegt also die Nennspannung an.

Durch die im Zeitintervall zwischen t1 und t2 ansteigende, am Antriebsmotor anliegende Spannung läuft der Antriebsmotor sanft an. Weiterhin wird der Einschaltstrom stark reduziert, so daß die dadurch hervorgerufenen Störungen ebenso reduziert sind.

Im Diagramm von Figur 3 ist auch die Steuerspannung für ein Ausschalten des Antriebsmotors zum Zeitpunkt t3 gezeigt. Wenn an dieser Stelle gewünscht wird, daß der Antriebsmotor langsam abgestoppt wird, kann auch an dieser Stelle eine lineare Änderung des Signals verwendet werden, also an dieser Stelle linear von 0 Volt ansteigend.

Wenn der mit dem Antriebsmotor 10 verbundene Verstellantrieb beispielsweise ein Fensterhebersystem für ein Kraftfahrzeug ist, beträgt die Zeitdauer zwischen den Punkten T1 und T2 in der Größenordnung von 0,15 bis 0,5 Sekunden. Dies führt bereits zu einer erheblichen Reduzierung des Geräusches beim Bewegungsbeginn der Scheibe, während längere Zeiten keine merkliche Verbesserung bringen und nur zu unnötigen Verlustleistungen im Transistor führen.

In Figur 4 ist ein Blockschaltbild einer alternativen Motorsteuerung gezeigt. Hier werden vier Transistoren 12, 18, 20, 21 verwendet, die in einer H-Brückenkonfiguration geschaltet sind, so daß der Antriebsmotor 10 in beiden Drehrichtungen angetrieben werden kann. Die entsprechenden Ansteuersignale stammen von einer Treiberschaltung 24.

In Figur 5 ist eine weitere Ausführungsform einer Steuerschaltung gezeigt. Bei dieser Ausführungsform wird ein Relais 26 als Brücke verwendet; die Drehrichtung des Antriebsmotors 10 wird also mittels der Relaiskontakte eingestellt. Die an den Antriebsmotor 10 angelegte Spannung wird mittels des Transistors 12 gesteuert.

Den beiden in den Figuren 4 und 5 gezeigten Steuerschaltungen ist eine numerische Steuerung 28 gemeinsam, mittels der verschiedene Zusatzfunktionen verwirklicht werden können, beispielsweise ein Überlastschutz.

Wenn der mit dem Antriebsmotor verbundene Verstellantrieb sich bereits in einer Endstellung befindet, das ganze System also blockiert ist, würde ein wiederholtes Einschalten des Antriebsmotors dazu führen, daß am Transistor hohe Verlustleistungen abfallen. Um zu verhindern, daß bei einem wiederholten Einschalten des Antriebsmotors in diesem Zustand übermäßig hohe thermische Belastungen auftreten, die zu einer Zerstörung der Steuerschaltung führen könnten, kann die numerische Steuerung 28 verhindern, daß der Antriebsmotor mehrfach hintereinander in derselben Richtung mit dem linearen Anstieg der Versorgungsspannung angesteuert wird. Es kann vorgesehen sein, eine Ansteuerung in derselben Richtung nur dann zuzulassen, wenn seit der letzten Ansteuerung eine bestimmte Zeitdauer vergangen ist. Es kann auch vorgesehen sein, eine Temperaturüberwachung vorzunehmen, die eine Ansteuerung mit ansteigender Versorgungsspannung, also hoher anfallender Verlustleistung, nur dann zuläßt, wenn dies zu keiner Überhitzung führt; andernfalls kann eine Ansteuerung unmittelbar mit der Nennspannung vorgenommen werden, so daß die anfallenden Verluste entsprechend gering sind.

Es ist weiterhin vorgesehen, die Ansteuerung mit der linear anwachsenden Versorgungsspannung nur dann durchzuführen, wenn der Motor in einer zur letzten Drehrichtung entgegengesetzten Drehrichtung betrieben werden soll. Dies beruht auf der Erkenntnis, daß das Spiel im Verstellantrieb nur dann durch sanftes Anlaufen des Antriebsmotors beseitigt werden muß, wenn eine Drehrichtungsumkehr stattfindet. Bei einem erneuten Anlaufen des Antriebsmotors in derselben Richtung wie beim vorhergehenden Betrieb ist das Spiel noch vom vorhergehenden Betriebszyklus beseitigt.

### Bezugszeichenliste

- 10:: Motor
- 12:: Transistor
- 14:: Regelschaltung
- 16:: Steuerschaltung
- 18:: Transistor
- 20:: Transistor
- 22:: Transistor
- 24:: Treiberschaltung
- 26:: Relais
- 28:: Numerische Steuerung

## Patentansprüche

1. Verfahren zur Steuerung eines elektrischen Antriebmotors (10) eines Kraftfahrzeug-Verstellantriebes mittels einer variablen Spannung, die an ihn angelegt wird, wobei ein steuerbarer Widerstand (12, 18, 20, 22) verwendet wird, der die an den Antriebsmotor angelegte Spannung bereitstellt, und an den Antriebsmotor (10) zum Anlaufen zunächst eine Startspannung angelegt wird, die geringer ist als eine während des Betriebs anliegende Nennspannung, und daß die Spannung dann auf die Nennspannung erhöht wird, **dadurch gekennzeichnet, daß** vor dem Anlaufen des Antriebsmotors (10) überprüft wird, in welcher Drehrichtung der Antriebsmotor zuletzt betrieben wurde, und daß an den Antriebsmotor nur dann die Startspannung angelegt wird, wenn der Antriebsmotor in einer zur letzten Drehrichtung entgegengesetzten Richtung anlaufen soll, während andernfalls unmittelbar die Nennspannung angelegt wird.

2. Verfahren nach Anspruch 1, **dadurch gekennzeichnet, daß** die Spannung innerhalb einer Zeitdauer von etwa 0,15 bis 0,5 Sekunden von der Startspannung bis auf die Nennspannung erhöht wird.

3. Verfahren nach einem der Ansprüche 1 oder 2, **dadurch gekennzeichnet, daß** die Spannung zumindest teilweise linear erhöht wird.

4. Verfahren nach einem der Ansprüche 1 bis 3, **dadurch gekennzeichnet, daß** die Spannung zumindest teilweise gemäß einer Sprungfunktion erhöht wird.

5. Verfahren nach einem der Ansprüche 1 bis 4, **dadurch gekennzeichnet, daß** als Startspannung eine Spannung von Null verwendet wird.

6. Verfahren nach einem der Ansprüche 1 bis 4, **dadurch gekennzeichnet, daß** als Startspannung eine Spannung verwendet wird, die etwa 30% der Nennspannung beträgt.

7. Verfahren nach einem der Ansprüche 1 bis 6, **dadurch gekennzeichnet, daß** die Spannung zunächst konstant auf dem Wert der Startspannung gehalten wird, anschließend stetig auf eine Zwischenspannung erhöht wird und schließlich gemäß einer Sprungfunktion von der Zwischenspannung auf die Nennspannung angehoben wird.

8. Verfahren nach einem der Ansprüche 1 bis 7, **dadurch gekennzeichnet, daß** vor dem Anlegen der Startspannung eine Spannung mit dem Wert der Nennspannung an den Antriebsmotor (10) angelegt wird.

9. Verfahren nach Anspruch 1, **dadurch gekennzeichnet, daß** die Nennspannung an den Antriebsmotor (10) nur dann angelegt wird, wenn seit dem letzten Betrieb eine bestimmte Zeitdauer vergangen ist.

10. Verfahren nach einem der Ansprüche 1 bis 9, **dadurch gekennzeichnet, daß** an den Antriebsmotor (10) zum Abstoppen eine Spannung angelegt wird, die kontrolliert von der Nennspannung bis auf Null absinkt.

11. Verfahren nach einem der Ansprüche 1 bis 10, **dadurch gekennzeichnet, daß** die Position eines vom Antriebsmotor (10) angetriebenen Bauteils überwacht und der Antriebsmotor rechtzeitig abgeschaltet wird, bevor das Bauteil einen ihm zugeordneten Anschlag erreicht.

12. Verfahren nach einem der Ansprüche 1 bis 11, **dadurch gekennzeichnet, daß** das von dem Antriebsmotor (10) bereitgestellte Drehmoment überwacht und der Antriebsmotor abgeschaltet wird, wenn ein bestimmtes Drehmoment überschritten wird, das signifikant dafür ist, daß ein vom Antriebsmotor angetriebenes Bauteil einen ihm zugeordneten Anschlag erreicht hat.

13. Verfahren nach einem der vorhergehenden Ansprüche, **dadurch gekennzeichnet, daß** als steuerbarer Widerstand ein Transistor (12, 18, 20, 22) verwendet wird.

14. Verfahren nach Anspruch 13, **dadurch gekennzeichnet, daß** als Transistor ein MOS-Feldeffekttransistor verwendet wird.

15. Verfahren nach Anspruch 13, **dadurch gekennzeichnet, daß** als Transistor ein bipolarer Transistor verwendet wird.

## Claims

1. Method for controlling an electric drive motor (10) of an adjusting drive in a motor vehicle by means of a variable voltage which is applied to the said drive motor, wherein a controllable resistor (12, 18, 20, 22) is used which provides the voltage which is applied to the drive motor, and a starting voltage which is lower than a rated voltage applied during operation is initially applied to the drive motor (10) in order to start it, and the voltage is then increased to the rated voltage, **characterized in that** before the drive motor (10) is started, a check is made to determine in which direction of rotation the drive motor was last operated, and **in that** the starting voltage is applied to the drive motor only when the intention is to start the drive motor in a direction opposite to the last direction of rotation, while otherwise the rated voltage is directly applied.

2. Method according to Claim 1, **characterized in that** the voltage is increased from the starting voltage up to the rated voltage within a time period of approximately 0.15 to 0.5 seconds.

3. Method according to either of Claims 1 or 2, **characterized in that** the voltage is increased at least partially linearly.

4. Method according to one of Claims 1 to 3, **characterized in that** the voltage is increased at least partially in accordance with a jump function.

5. Method according to one of Claims 1 to 4, **characterized in that** the starting voltage used is a voltage of zero.

6. Method according to one of Claims 1 to 4, **characterized in that** the starting voltage used is a voltage which is approximately 30% of the rated voltage.

7. Method according to one of Claims 1 to 6, **characterized in that** the voltage is initially held constant at the value of the starting voltage, is then continuously increased to an intermediate voltage, and finally raised from the intermediate voltage to the rated voltage in accordance with a jump function.

8. Method according to one of Claims 1 to 7, **characterized in that** a voltage with the value of the rated voltage is applied to the drive motor (10) before the starting voltage is applied.

9. Method according to Claim 1, **characterized in that** the rated voltage is applied to the drive motor (10) only when a specific time period has elapsed since the last operation.

10. Method according to one of Claims 1 to 9, **characterized in that** a voltage which falls from the rated voltage down to zero in a controlled manner is applied to the drive motor (10) in order to stop it.

11. Method according to one of Claims 1 to 10, **characterized in that** the position of a component which is driven by the drive motor (10) is monitored and the drive motor is switched off in good time before the component reaches its associated stop.

12. Method according to one of Claims 1 to 11, **characterized in that** the torque which is provided by the drive motor (10) is monitored, and the drive motor is switched off when a specific torque is exceeded which signifies that a component which is driven by the drive motor has reached its associated stop.

13. Method according to one of the preceding claims, **characterized in that** the controllable resistor used is a transistor (12, 18, 20, 22).

14. Method according to Claim 13, **characterized in that** the transistor used is an MOS field-effect transistor.

15. Method according to Claim 13, **characterized in that** the transistor used is a bipolar transistor.

## Revendications

1. Procédé pour commander un moteur d'entraînement électrique (10) d'un dispositif d'entraînement de réglage de véhicule automobile au moyen d'une tension variable à laquelle il est relié, en utilisant une résistance (12, 18, 20, 22) commandable qui fournit la tension appliquée au moteur d'entraînement, et en appliquant d'abord au moteur d'entraînement (10) pour le démarrer, une tension de démarrage inférieure à une tension nominale appliquée pendant le fonctionnement, pris en augmentant la tension jusqu'à la tension nominale,
**caractérisé en ce qu'**
avant le démarrage du moteur d'entraînement (10), on vérifie dans quel sens de rotation celui-ci a fonctionné en dernier, et la tension de démarrage n'est appliquée au moteur d'entraînement que s'il doit démarrer dans le sens inverse du dernier sens de rotation tandis que, dans le cas contraire, la tension nominale est directement appliquée.

2. Procédé selon la revendication 1,
**caractérisé en ce que**
la tension est augmentée de la tension de démarrage jusqu'à la tension nominale pendant une période de 0,15 à 0,5 secondes environ.

3. Procédé selon l'une quelconque des revendications 1 ou 2,
**caractérisé en ce que**
la tension est augmentée du moins partiellement de façon linéaire.

4. Procédé selon l'une quelconque des revendications 1 à 3,
**caractérisé en ce que**
la tension est augmentée au moins partiellement selon une fonction de saut.

5. Procédé selon l'une quelconque des revendications 1 à 4,
**caractérisé en ce que**
comme tension de démarrage, on utilise une tension nulle.

6. Procédé selon l'une quelconque des revendications 1 à 4,
**caractérisé en ce que**
comme tension de démarrage, on utilise une tension qui correspond à 30 % environ de la tension nominale.

7. Procédé selon l'une quelconque des revendications 1 à 6,
**caractérisé en ce que**
la tension est d'abord maintenue constante à la valeur de la tension de démarrage, est ensuite augmentée progressivement à une tension intermédiaire, pour être augmentée finalement selon une fonction de saut de la tension intermédiaire jusqu'à la tension nominale.

8. Procédé selon l'une quelconque des revendications 1 à 7,
**caractérisé en ce qu'**
avant l'application de la tension de démarrage, on applique au moteur d'entraînement (10) une tension dont la valeur est la tension nominale.

9. Procédé selon la revendication 1,
**caractérisé en ce que**
la tension nominale n'est appliquée au moteur d'entraînement (10) que si depuis le dernier fonctionnement une période déterminée s'est écoulée.

10. Procédé selon l'une quelconque des revendications 1 à 9,
**caractérisé en ce que**
on applique au moteur d'entraînement (10) une tension pour l'arrêter que l'on diminue de façon contrôlée de la tension nominale jusqu'à zéro.

11. Procédé selon l'une quelconque des revendications 1 à 10,
**caractérisé en ce que**
la position d'un composant entraîné par le moteur d'entraînement (10) est surveillée et le moteur d'entraînement est coupé avant que le composant n'arrive contre une butée qui lui est associée.

12. Procédé selon l'une quelconque des revendications 1 à 11,
**caractérisé en ce qu'**
on surveille le couple de rotation fourni par le moteur d'entraînement (10) et le moteur d'entraînement est coupé s'il dépasse un couple de rotation déterminé qui signale qu'un composant entraîné par le moteur d'entraînement a atteint une butée qui lui est associée.

13. Procédé selon l'une quelconque des revendications précédentes,
**caractérisé en ce que**
comme résistance commandable on utilise un transistor (12, 18, 20, 22).

14. Procédé selon la revendication 13,
**caractérisé en ce que**
comme transistor, on utilise un transistor à effet de champ MOS.

15. Procédé selon la revendication 13,
**caractérisé en ce que**
comme transistor, on utilise un transistor bipolaire.
